# EUROPÄISCHE PATENTANMELDUNG

(11) **EP 4 545 828 A1**
(43) Veröffentlichungstag der Anmeldung: **30.04.2025**
(21) Anmeldenummer: 24208744.3
(22) Anmeldetag: 24.10.2024
(51) Int. Cl.: F16K 17/10, B65D 90/34, F17C 13/00

(54) **TANKANLAGE UND ÜBERDRUCKVENTILANORDNUNG DAFÜR**

(30) Priorität: 27.10.2023 DE 102023129727
(71) Anmelder: Leinemann GmbH & Co. KG, 38110 Braunschweig (DE)
(72) Erfinder: Kosmehl, Ralf, 31275 Lehrte (DE)
(74) Vertreter: Gramm, Lins & Partner Patent- und Rechtsanwälte PartGmbB

(57) **Zusammenfassung**

Die Erfindung betrifft eine Tankanlage, die einen Tank (2) und eine Ventilanordnung mit einem pilotgesteuerten Überdruckventil (4) aufweist, wobei das Überdruckventil (4) eine Hauptventilkammer (10), eine Füllleitung (22), einen Piloten (16) und eine Steuerleitung (18) aufweist, wobei die Hauptventilkammer (10) mit der Füllleitung (22) verbunden und über diese mit einem Füllmedium füllbar ist und wobei die Steuerleitung (18) mit dem Tank (2) und dem Piloten (16) derart verbunden ist, dass der Pilot (16) geöffnet wird, wenn ein Druck in der Steuerleitung (18) einen vorbestimmten Ansprechdruck überschreitet, wodurch das Überdruckventil (4) geöffnet wird, wobei die Ventilanordnung ein mit einem Spülmedium gefülltes Reservoir (20) aufweist, wobei die Ventilanordnung eingerichtet ist, das Spülmedium mit einem Spüldruck in die Steuerleitung (18) und/oder in die Füllleitung (22) zu leiten.

## Beschreibung

Die Erfindung betrifft eine Tankanlage, die einen Tank und eine Ventilanordnung mit einem pilotgesteuerten Überdruckventil aufweist, wobei das Überdruckventil eine Hauptventilkammer, eine Füllleitung, einen Piloten und eine Steuerleitung aufweist, wobei die Hauptventilkammer mit der Füllleitung verbunden und über diese mit einem Füllmedium füllbar ist und wobei die Steuerleitung mit dem Tank und dem Piloten derart verbunden ist, dass der Pilot geöffnet wird, wenn der Druck in der Steuerleitung einen vorbestimmten Ansprechdruck überschreitet, wodurch das Überdruckventil geöffnet wird. Die Erfindung betrifft zudem eine Ventilanordnung für eine solche Tankanlage.

Tankanlagen der oben beschriebenen Art und derartige Ventilanordnungen sind aus dem Stand der Technik seit langem bekannt. In solchen Tankanlagen werden beispielsweise große Mengen Öl oder Gas gelagert und auch zur Lagerung von Chemikalien in flüssiger oder gasförmiger Form werden solche Tankanlagen benutzt. Durch Befüllung und Entleerung aber auch durch Temperaturunterschiede kann es dabei zu einer Ausdehnung des im Tank der Tankanlage gespeicherten Mediums kommen, so dass der Druck im Inneren des Tanks steigt. Dabei gilt es zu verhindern, dass der Druck so hoch wird, dass der Tank beschädigt wird und das enthaltene Medium unkontrolliert in die Umgebung entweicht.

Um in dieser Situation den Druck im Inneren des Tanks kontrolliert reduzieren zu können, wird die Ventilanordnung mit dem Überdruckventil verwendet. Das eigentliche Überdruckventil hat einen Zulauf, der mit dem Tank verbunden ist, und einen Ablauf, der mit einer Rohrleitung verbunden sein kann, durch die Medium, das aus dem Tank durch das Überdruckventil austritt, abgeführt werden kann. Eine Passage in dem Überdruckventil zwischen dem Zulauf und dem Ablauf wird im geschlossenen Zustand des Überdruckventils von einem Ventilteller des Überdruckventils verschlossen, der dichtend an einem Ventilsitz des Überdruckventils anliegt.

Der Ventilteller weist dabei vorzugsweise zwei Anteile auf, die vorzugsweise jeweils scheibenförmig ausgebildet sind. Der erste dieser Anteile liegt im geschlossenen Zustand des Überdruckventils an dem Ventilsitz an und trennt so eine Hochdruck-Seite, die dem Tankinneren zugewandt ist und an der der Druck aus dem Inneren des Tankes anliegt, von einer Niedrigdruck-Seite, die dem Ablauf des Überdruckventils zugewandt ist. Der zweite Anteil des Ventiltellers ist mit dem ersten Anteil beispielsweise über eine Stange oder einen Stift verbunden und verschließt im geschlossenen Zustand des Überdruckventils eine Öffnung zwischen dem Ablauf des Überdruckventils und der Hauptventilkammer. In anderen Ausführungsformen ist er mit einer Membran zur Betätigung verbunden. Die Hauptventilkammer und die beiden Anteile des Ventiltellers sind dabei so angeordnet, dass der Ventilteller zum Öffnen des Überdruckventils in Richtung auf die Hauptventilkammer verschoben werden muss. Dies bedeutet, dass der erste Anteil in Richtung auf die Niedrigdruck-Seite und damit entgegen der aus der Druckdifferenz resultierenden Kraft bewegt werden muss.

Die Hauptventilkammer wird durch die Füllleitung mit einem Füllmedium befüllt. Dieses ist in der Regel das Medium, das in dem Tank gespeichert ist, so dass in der Hauptventilkammer vorzugsweise der gleiche Druck wie in dem Tank herrscht. Das bedeutet, dass die Druckdifferenz zwischen der Hochdruck-Seite und der Niedrigdruck-Seite für beide Anteile des Ventiltellers identisch ist. Die Niedrigdruck-Seite wird jeweils durch den Ablauf des Überdruckventils gebildet. Die Hochdruck-Seite ist bei dem ersten Anteil des Ventiltellers durch das Innere des Tanks und bei dem zweiten Anteil des Ventiltellers durch die Hauptventilkammer gebildet, die unter dem gleichen Druck stehen.

Vorzugsweise ist die mit Druck beaufschlagte Fläche des zweiten Anteils des Ventiltellers größer als die mit Druck beaufschlagte Fläche des ersten Anteils des Ventiltellers, so dass der Ventilteller durch die daraus resultierende Kraft in die geschlossene Stellung gedrückt wird.

Der Pilot, der auch als Pilotventil bezeichnet wird, ist ein eigenes Ventil, das eine Kraftvorrichtung aufweist, die beispielsweise ein elastisches Element, beispielsweise eine Feder, oder ein magnetisches Element aufweist. Der Pilot weist eine Pilotkammer auf, die mit der Steuerleitung verbunden ist. In der Steuerleitung, die mit dem Inneren des Tankes verbunden ist, herrscht der Innendruck des Tankes. Der Pilot wird geöffnet, wenn eine Druckdifferenz zwischen dem Umgebungsdruck (Atmosphäre) und dem in der Steuerleitung herrschenden Druck den Ansprechdruck überschreitet, so dass die von der Kraftvorrichtung aufgebracht Kraft überwunden wird. Durch das Öffnen des Piloten wird die Hauptventilkammer entlastet, so dass die Druckdifferenz zwischen der Hochdruck-Seite und der Niedrigdruck-Seite des zweiten Anteils des Ventiltellers reduziert wird und bevorzugt Null beträgt. Der gesamte Ventilteller wird dann durch die Druckdifferenz an dem ersten Anteil des Ventiltellers in die geöffnete Position verschoben und das Überdruckventil wird geöffnet.

Nachteilig ist, dass es in der Füllleitung, in der aus dem Inneren des Tanks stammendes Medium vorhanden ist, um den Druck weiterzugeben und die Hauptventilkammer zu füllen, zu Verschmutzungen und zu einer Resublimation, beispielsweise von Schwefel, kommen kann. Dies beeinträchtigt die Ventilfunktion und kann sogar zu Verstopfungen führen. Bei niedrigsiedenden gasförmigen Medien, die in dem Tank gelagert werden und mit denen die Hauptventilkammer gefüllt ist, kann es zudem in der Hauptventilkammer zu einer Kondensation des Mediums kommen. Dadurch wird es aufgrund der dadurch vergrößerten Dichte des Mediums deutlich schwerer, das Medium aus der Hauptventilkammer auszustoßen, wenn das Ventil geöffnet wird.

Der Erfindung liegt die Aufgabe zugrunde, diese Nachteile zu beheben oder zumindest zu mildern.

Die Erfindung löst die gestellte Aufgabe durch eine Tankanlage der oben beschriebenen Art, die sich dadurch auszeichnet, dass die Ventilanordnung ein mit einem Spülmedium gefülltes Reservoir aufweist, wobei die Ventilanordnung eingerichtet ist, das Spülmedium mit einem Spüldruck in die Füllleitung und/oder in die Steuerleitung zu leiten, wobei der Spüldruck kleiner als der Ansprechdruck ist.

Die Füllleitung verbindet das Reservoir mit der Hauptventilkammer. Es ist daher möglich, die Hauptventilkammer mit dem Spülmedium, beispielsweise Druckluft oder Stickstoff, zu füllen, wodurch eine Kondensation des Mediums, mit dem die Hauptventilkammer gefüllt ist, vermieden wird. Das Spülmedium ist vorzugsweise ein Gas, beispielsweise Luft oder Stickstoff, oder das Medium, das im Tank gelagert wird.

Der Spüldruck kann in der Füllleitung und der Steuerleitung unterschiedliche Werte annehmen. Der Spüldruck in der Steuerleitung ist vorzugsweise größer als der reale Tankdruck, also der Druck, der in dem Tank der Tankanlage herrscht. Damit wird erreicht, dass die Steuerleitung tatsächlich durch das Spülmedium gespült wird. Der Tank der Tankanlage weist einen maximalen Tank-Arbeitsdruck auf, der in dem Tank maximal herrschen kann oder darf, bevor Maßnahmen gegen einen weiter ansteigenden Druck ergriffen werden müssen. Vorzugsweise ist der Spüldruck in der Steuerleitung so gewählt, dass er größer als der maximale Tank-Arbeitsdruck ist. Der Spüldruck in der Steuerleitung ist vorzugsweise so gewählt, dass er kleiner als der Ansprechdruck ist, bei dem der Pilot geöffnet wird. Dadurch wird erreicht, dass es nicht zu einer versehentlichen Öffnung des Piloten und dadurch auch des Überdruckventils durch das unter dem Spüldruck stehende Spülmedium kommt.

Der Spüldruck in der Füllleitung ist vorzugsweise größer als der reale Tankdruck, also der Druck, der in dem Tank der Tankanlage herrscht. Damit wird erreicht, dass die Füllleitung tatsächlich durch das Spülmedium gespült wird. Der Tank der Tankanlage weist einen maximalen Tank-Arbeitsdruck auf, der in dem Tank maximal herrschen kann oder darf, bevor Maßnahmen gegen einen weiter ansteigenden Druck ergriffen werden müssen. Vorzugsweise ist der Spüldruck in der Füllleitung so gewählt, dass er größer als der maximale Tank-Arbeitsdruck ist. Der Spüldruck in der Füllleitung ist nach oben nicht durch den Ansprechdruck des Piloten begrenzt. Der Spüldruck in der Füllleitung ist vorzugsweise größer als der Ansprechdruck. Je größer der Spüldruck in der Füllleitung ist, desto größer ist auch der in der Hauptventilkammer herrschende Druck und damit die auf den zweiten Anteil des Ventiltellers wirkende Kraft. Da der Spüldruck vorzugsweise größer als der reale Tankdruck ist, der auf den ersten Anteil des Ventiltellers wirkt, sorgt diese Ausgestaltung für eine große Schließkraft und daher für ein besonders sicher und dadurch auch besonders dicht geschlossenes Überdruckventil. Der Spüldruck in der Füllleitung wird nach oben durch die Stabilität der mit dem Spüldruck beaufschlagten Bauteile begrenzt.

Vorzugsweise beträgt der Spüldruck wenigstens 90%, bevorzugt wenigstens 93%, besonders bevorzugt wenigstens 96% des Ansprechdruckes.

Das Reservoir weist vorzugsweise einen abgeschlossenen Behälter, beispielsweise einen Druckbehälter, Container oder einen Tank, auf, in dem das Spülmedium unter einem Speicherdruck gespeichert wird. Der Speicherdruck ist vorzugsweise höher als der Spüldruck, so dass vorzugsweise möglichst viel des Spülmediums in dem Reservoir gespeichert ist. Alternativ oder zusätzlich dazu weist das Reservoir wenigstens eine Nachschubleitung auf, durch die Spülmedium, vorzugsweise kontinuierlich, bereitgestellt wird. Vorzugsweise ist das Reservoir über eine Spülleitung mit der Füllleitung verbunden. Dies ist insbesondere dann sinnvoll, wenn die Füllleitung den Tank mit der Hauptventilkammer verbindet. Die Hauptventilkammer ist in diesem Fall sowohl mit dem Spülmedium als auch mit dem Medium aus dem Tank befüllbar. Vorzugsweise ist ein Ventil, beispielsweise ein Schaltventil, vorhanden, durch das zwischen den beiden Möglichkeiten umgeschaltet werden kann.

Alternativ oder zusätzlich dazu ist das Reservoir über eine Spülleitung mit der Füllleitung und die Füllleitung über eine Verbindungsleitung mit der Steuerleitung, wobei vorzugsweise in der Verbindungsleitung ein Rückschlagventil angeordnet ist, das einen Durchfluss von der Füllleitung in die Steuerleitung erlaubt und einen Rückfluss aus der Steuerleitung in die Füllleitung verhindert. Durch diese Anordnung wird die Hauptventilkammer mit dem Spülmedium gefüllt und steht daher unabhängig von dem Druck im Inneren des Tanks unter dem Spüldruck. Wenn der Spüldruck höher als der Innendruck des Tanks ist, sorgt diese Anordnung für eine höhere Schließkraft, weil am ersten Anteil des Ventiltellers eine Druckdifferenz zwischen der Atmosphäre und dem Tankinnendruck in Richtung auf die geöffnete Stellung wirkt und am zweiten Anteil des Ventiltellers eine größere Druckdifferenz zwischen der Atmosphäre und dem Spüldruck in Richtung auf die geschlossene Stellung wirkt. Durch die Verbindungsleitung wird zudem Spülmedium in die Steuerleitung eingeleitet, so dass auch die Steuerleitung gespült wird.

Die Steuerleitung verbindet vorzugsweise das Innere des Tanks mit dem Piloten. Vorzugsweise zwischen diesen beiden Enden der Steuerleitung ist die Steuerleitung mit einer Spülleitung verbunden, durch die das Spülmedium in die Steuerleitung eingeleitet werden kann. Diese Verbindungsstelle liegt vorzugsweise möglichst weit in Richtung Pilotventil, bevorzugt weniger als 20 cm, besonders bevorzugt weniger als 10 cm, höchst bevorzugt weniger als 5 cm von dem Piloten entfernt.

Das Spülmedium wird unter einem Spüldruck in die Steuerleitung eingeleitet. Dieser Spüldruck ist vorzugsweise nur wenig kleiner als der Ansprechdruck. Er ist daher meistens größer als der im Tank herrschende Druck. Das Medium, das sich in der Steuerleitung befindet, wird daher in diesen Fällen von dem Spülmedium aus der Steuerleitung heraus und in den Tank hineingedrückt. In der Steuerleitung herrscht dann der Spüldruck, der einerseits größer als der Tank-Innendruck ist, so dass die Steuerleitung zumindest in dem Abschnitt zwischen dem Einleitungspunkt des Spülmediums in die Steuerleitung und dem Tank von dem Spülmedium gespült wird. Das bedeutet, dass das Spülmedium in diesem Abschnitt durch die Steuerleitung strömt, und nicht, wie im Stand der Technik üblich, darin steht. So werden Anhaftungen, Verschmutzungen und Resublimationen vermieden oder zumindest reduziert. Andererseits ist der herrschende Spüldruck kleiner als der Ansprechdruck des Piloten, so dass ein versehentliches Öffnen des Piloten und damit des Überdruckventils vermieden wird.

Steigt der Druck innerhalb des Tanks auf einen Wert an, der größer als der Spüldruck ist, wird das im Tank befindliche Medium in die Steuerleitung gedrückt und in der Steuerleitung herrscht dann dieser Tank-Innendruck. Steigt dieser Druck über den Ansprechdruck, wird der Pilot wie im Stand der Technik geöffnet, wodurch die Hauptventilkammer entlastet und das Überdruckventil geöffnet wird. Solange der Tankinnendruck größer als der Spüldruck ist, wird die Steuerleitung nicht gespült, sondern das darin enthaltene Medium steht in der Steuerleitung.

Damit dies nur über einen möglichst kurzen Zeitraum der Fall ist, ist der Spüldruck vorzugsweise nur wenig kleiner als der Ansprechdruck.

In einer bevorzugten Ausgestaltung ist das Reservoir über eine Spülleitung mit der Steuerleitung verbunden. Durch diese Spülleitung wird das Spülmedium in die Steuerleitung geleitet. Vorzugsweise ist in der Spülleitung ein Rückschlagventil, das auch Ein-Wege-Ventil genannt wird, angeordnet. Es erlaubt einen Durchfluss von Spülmedium aus dem Reservoir in die Steuerleitung und es verhindert einen Rückfluss aus der Steuerleitung in das Reservoir.

Vorzugsweise sind die mit Druck beaufschlagten Flächen des ersten Anteils des Ventiltellers und des zweiten Anteils des Ventiltellers so gewählt, dass auch für den Fall, dass der Tankinnendruck größer als der Spüldruck, aber kleiner als Ansprechdruck ist, eine ausreichend große Schließkraft auf den Ventilteller wirkt, um das Überdruckventil sicher geschlossen zu halten.

Vorzugsweise weist die Füllleitung ein Ventil auf, das in einen ersten Zustand und in einen zweiten Zustand bringbar ist. Befindet sich das Ventil in dem ersten Zustand, ist die Hauptventilkammer mit dem Spülmedium befüllbar. Befindet sich das Ventil in dem zweiten Zustand, ist die Hauptventilkammer mit dem Medium befüllbar, das sich in dem Tank befindet. Durch dieses Ventil kann also zwischen einer Befüllung aus dem Reservoir und einer Befüllung aus dem Tank umgeschaltet werden. Dies ist insbesondere dann von Vorteil, wenn ein geschlossenes Volumen als Reservoir verwendet wird, das beispielsweise ausgewechselt oder nachgefüllt werden muss.

Das Ventil ist bevorzugt in Richtung auf den zweiten Zustand vorbelastet. Dazu ist beispielsweise eine Feder vorhanden.

In einer bevorzugten Ausgestaltung weist die Ventilanordnung einen Druckminderer auf, der den Druck des Spülmediums auf den Spüldruck reduziert. Der Druckminderer ist vorzugsweise in der Verbindungsleitung, der Spülleitung oder der Füllleitung angeordnet. In einer besonders bevorzugten Ausgestaltung weist die Ventilanordnung mehrere Druckminderer auf. Besonders bevorzugt ist ein erster Druckminderer vorhanden, der beispielsweise in der Spülleitung oder in der Füllleitung angeordnet ist und der die Größe des Spüldrucks in der Füllleitung und damit auch in der Hauptventilkammer vorgibt. Vorzugsweise ist ein weiterer Druckminderer vorhanden, der beispielsweise in der Steuerleitung, besonders bevorzugt in der Verbindungsleitung angeordnet ist und den Spüldruck in der Steuerleitung vorgibt. Auf diese Weise können der Spüldruck in der Füllleitung und der Spüldruck in der Steuerleitung getrennt und unabhängig von einander eingestellt werden. Vorzugsweise ist der Spüldruck in der Steuerleitung geringer als der Spüldruck in der Füllleitung.

Die Erfindung löst die gestellte Aufgabe zu dem durch eine Ventilanordnung für eine Tankanlage der hier beschriebenen Art. Die Ventilanordnung weist ein pilotgesteuertes Überdruckventil mit einer Hauptventilkammer, einer Füllleitung, einem Piloten und einer Steuerleitung, auf und weist zudem ein mit einem Spülmedium gefülltes Reservoir auf und ist eingerichtet, das Spülmedium mit einem Spüldruck in die Füllleitung zu leiten, wobei der Spüldruck kleiner als der Ansprechdruck ist.

Mit Hilfe der beigefügten Figuren werden nachfolgend einige Ausführungsbeispiele der vorliegenden Erfindung näher erläutert. Es zeigen:
Figur 1 - eine schematische Darstellung eines Teils einer Tankanlage gemäß dem Stand der Technik und
Figuren 2 bis 15 - schematische Darstellungen von Tankanlagen gemäß unterschiedlicher Ausführungsbeispiele der vorliegenden Erfindung.

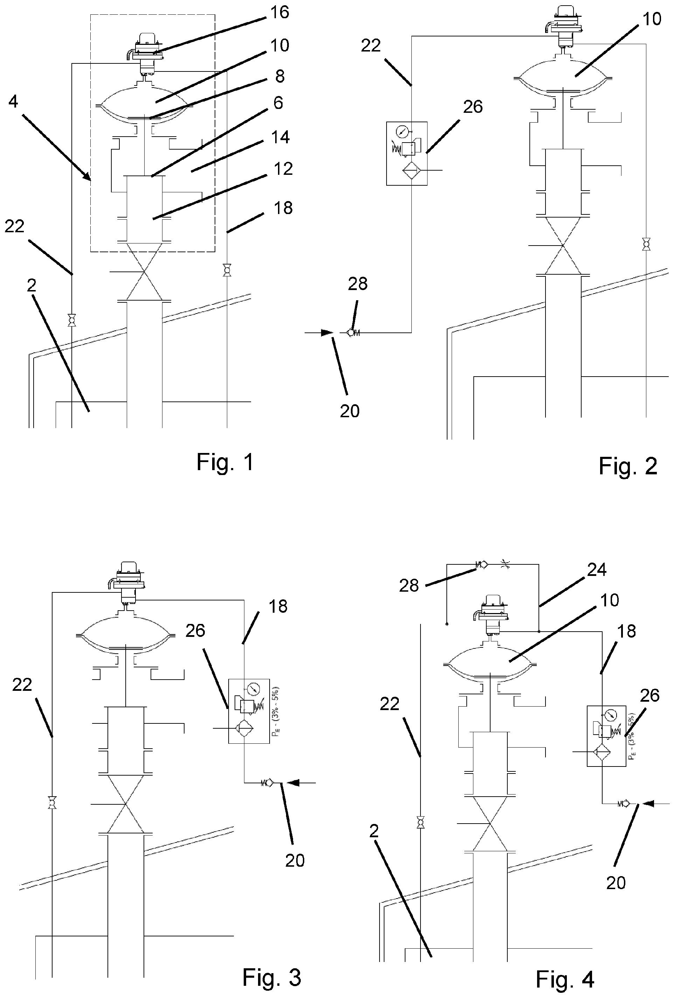

Figur 1 zeigt einen Ausschnitt einer Tankanlage gemäß dem Stand der Technik. Sie verfügt über einen Tank 2, dem gezeigten Ausführungsbeispiel doppelwandig ausgebildet ist, und eine Ventilanordnung mit einem Überdruckventil 4. Das Überdruckventil 4 weist einen Ventilteller auf, der einen ersten Anteil 6 und einen zweiten Anteil 8 beinhaltet. Der erste Anteil 6 ist zwischen einem Zulauf 12 des Überdruckventils 4 und einem Ablauf 14 des Überdruckventils 4 angeordnet. Der zweite Anteil 8 trennt in dem dargestellten geschlossenen Zustand den Ablauf 14 des Überdruckventils 4 von dessen Hauptventilkammer 10. Oberhalb der Hauptventilkammer 10 ist der Pilot 16 dargestellt.

Eine Steuerleitung 18 verbindet den Piloten 16 mit dem Tank 2 und leitet den in dem Tank 2 herrschenden Druck an den Piloten 16 weiter. Die Tankanlage verfügt zudem über eine Füllleitung 22, die den Tank 2 mit der Hauptventilkammer 10 verbindet. Übersteigt der Druck im Tank 2 einen vorbestimmten Ansprechdruck, öffnet der Pilot 16 und die Hauptventilkammer 10 wird entlastet, also der Druck innerhalb der Hauptventilkammer 10 auf den außerhalb der Anlage herrschenden Atmosphärendruck abgesenkt. Dadurch öffnet das Überdruckventil und der Ventilteller mit dem ersten Anteil 6 und dem zweiten Anteil 8 wird die geöffnete Position verschoben.

Figur 2 zeigt eine Ausführungsform einer Tankanlage gemäß einem ersten Ausführungsbeispiel der vorliegenden Erfindung. Anders als bei der Anlage aus dem Stand der Technik ist die Füllleitung 22 nicht mit dem Tank 2, sondern mit einem Reservoir 20 verbunden, das im gezeigten Ausführungsbeispiel als Versorgungsleitung ausgebildet ist. Über dieses Reservoir 20 wird ein Füllmedium durch ein Rückschlagventil 28 dem System zugeführt, das in die Füllleitung 22 eingeleitet wird. In der Füllleitung 22 befindet sich ein Druckminderer 26, durch den der Druck des aus dem Reservoir 20 strömenden Füllmediums auf einen Spüldruck reduziert wird, der kleiner als der Ansprechdruck des Ventils ist. Im gezeigten Ausführungsbeispiel liegt der Spüldruck 3 % bis 5 % unterhalb des Ansprechdrucks.

In dieser Ausgestaltung wird das Füllmedium, dass aus dem Reservoir 20 strömt, in die Hauptventilkammer 10 eingeleitet.

Figur drei zeigt eine andere Ausgestaltung. Hier ist das Reservoir 20 nicht mit der Füllleitung 22, sondern mit der Steuerleitung 18 verbunden. In dieser befindet sich im gezeigten Ausführungsbeispiel der Druckminderer 26, der den Druck des aus dem Reservoir 20 strömenden Füllmediums auf den Spüldruck reduziert, der kleiner als der Ansprechdruck ist.

In Figur 4 ist die Ausgestaltung aus Figur 3 um eine Verbindungsleitung 24 ergänzt worden, durch die die Steuerleitung 18 mit der Füllleitung 22 verbunden ist. Das aus dem Reservoir 20 strömende Medium, dessen Druck durch den Druckminderer 26 gemindert wird, kann durch die Verbindungsleitung 24 aus der Steuerleitung 18 in die Füllleitung 22 strömen und so die Hauptventilkammer 10 füllen. Um zu verhindern, dass Medium aus dem Tank 2, mit dem die Füllleitung 22 verbunden ist, in die Steuerleitung 18 strömt, ist ein Rückschlagventil 28 in der Verbindungsleitung 24 angeordnet.

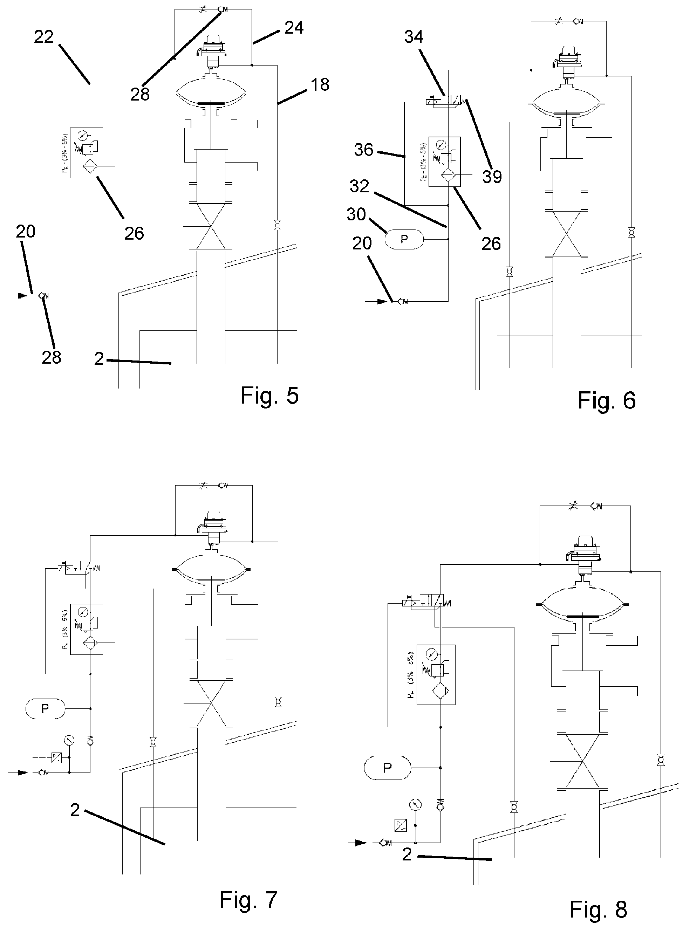

Figur 5 zeigt eine weitere Ausgestaltung, bei der das Reservoir 20 wieder mit der Spülleitung 22 verbunden ist. Die Verbindungsleitung 24 verbindet wie in Figur 4 gezeigt, die Füllleitung 22 mit der Steuerleitung 18. In der Verbindungsleitung 24 ist wieder das Rückschlagventil 28 positioniert, dass im Vergleich zu Figur 4 jedoch in umgekehrter Richtung wirkt. In Figur 4 erlaubt das Rückschlagventil 28 einen Durchfluss aus der Steuerleitung 18 in die Füllleitung 22 und verhindert den Durchfluss in die entgegengesetzte Richtung. In Figur 5 erlaubt das Rückschlagventil 28 einen Durchfluss aus der Füllleitung 22 in die Steuerleitung 18 und verhindert den Rückfluss in die entgegengesetzte Richtung. Das aus dem Reservoir 20 strömende Medium füllt in dieser Ausgestaltung einerseits die Hauptventilkammer 10 und spült andererseits die Steuerleitung 18, sofern der im Tank 2 herrschende Druck kleiner als der Spüldruck ist, der durch den Druckminderer 26 eingestellt wird.

Wenn der Druck in dem Tank 2 kleiner als der Spüldruck ist, wird Spülmedium aus einem Reservoir 20, das hier als Zuleitung ausgebildet ist, über die Füllleitung 22 und eine Verbindungsleitung 24 in die Steuerleitung 18 eingeleitet. Das Spülmedium durchläuft einen Druckminderer 26, in dem das Spülmedium auf einen Spüldruck gebracht wird. In der Verbindungsleitung 24 befindet sich das Rückschlagventil 28, das einen Durchfluss von der Füllleitung in die Steuerleitung 18 (in Figur 5 von links nach rechts) erlaubt und in die entgegengesetzte Richtung verhindert.

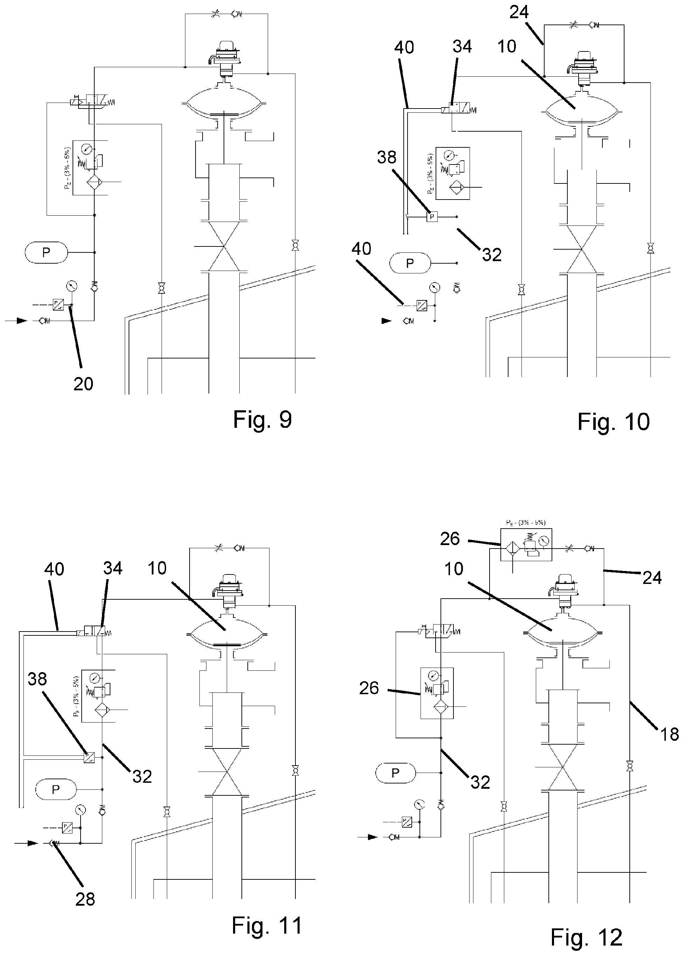

Figur 6 zeigt eine andere Ausführungsform. Das Reservoir 20 ist nun neben der Zuleitung auch als abgeschlossener Behälter 30 ausgebildet. Zusätzlich zu der Steuerleitung 18, der Verbindungsleitung 24 und der Füllleitung 22, die anders als in Figur 5 den Piloten 16 mit dem Tank 2 verbindet, weist die Ausgestaltung in Figur 6 eine Spülleitung 32 auf, in der der Druckminderer 26 angeordnet ist. In Figur 6 ist zudem ein Ventil 34 dargestellt, das in einem ersten Zustand gezeigt ist. In diesem Zustand ist die Spülleitung 32 über das Ventil 34 mit dem oberen Teil der Füllleitung 22 verbunden, so dass die Hauptventilkammer 10 mit dem Spülmedium aus dem Reservoir 20 gefüllt werden kann. Das Ventil 34 wird über die Schaltleitung 36 durch den im Reservoir 20 herrschenden Druck in diesem ersten Zustand gehalten. Man erkennt eine Feder 39, die das Ventil 34 in Richtung auf einen nicht gezeigten zweiten Zustand vorspannt. Wenn der Druck in der Schaltleitung 36 abfällt und die so aufgebrachte Kraft kleiner als die von der Feder 39 aufgebrachte Kraft ist, wird das Ventil 34 in den zweiten Zustand gebracht, in dem die Hauptventilkammer 10 mit dem Medium aus dem Tank 2 befüllt werden kann. Diese Situation ist in Figur 7 und 8 dargestellt. Diese beiden Darstellungen unterscheiden sich nur in der Ausgestaltung des Tanks 2, der in Figur 7 als doppelwandiger Tank und in Figur 8 als einwandiger Tank dargestellt ist. In Figur 9 ist zusätzlich zu der Darstellung aus Figur 6 eine weitere Ausgestaltung des Reservoirs 20 dargestellt.

In Figur 10 ist dargestellt, dass die Spülleitung 32 mit einem Drucksensor 38 ausgerüstet ist, durch den der Druck innerhalb der Spülleitung 32 bestimmbar ist. Die von dem Drucksensor 38 erzeugten Signale werden verwendet, um durch die dargestellten elektrischen Leitungen 40 das Ventil 34 zu steuern, dass in der Figur 10 im ersten Zustand gezeigt ist, sodass die Hauptventilkammer 10 mit dem Spielmedium gespült wird. In Figur 11 ist der umgekehrte Fall gezeigt. Die Signale des Sensors 38 haben dazu geführt, dass das Ventil 34 sich in der zweiten Position befindet, sodass die Hauptventilkammer 10 mit dem Medium aus dem Tank zwei befüllt wird.

In Figur 12 ist ein weiterer Druckminderer 26 in der Verbindungsleitung 24 dargestellt. Der Druck des durch die Spülleitung 32 strömenden Mediums wird durch den ersten Druckminderer 26, der sich in der Spülleitung 32 befindet, auf einen ersten Druck reduziert, der kleiner als der Ansprechdruck ist. Mit diesem Druck wird die Hauptventilkammer 10 befüllt. Es kann sinnvoll sein, diesen Druck nicht zum Spülen der Steuerleitung 18 zu verwenden, sondern für diese den Spüldruck zu verwenden. Daher ist in der Verbindungsleitung 24 der zweite Druckminderer 26 vorhanden, der das durch die Verbindungsleitung 24 strömende Medium auf den gewünschten Spüldruck bringt.

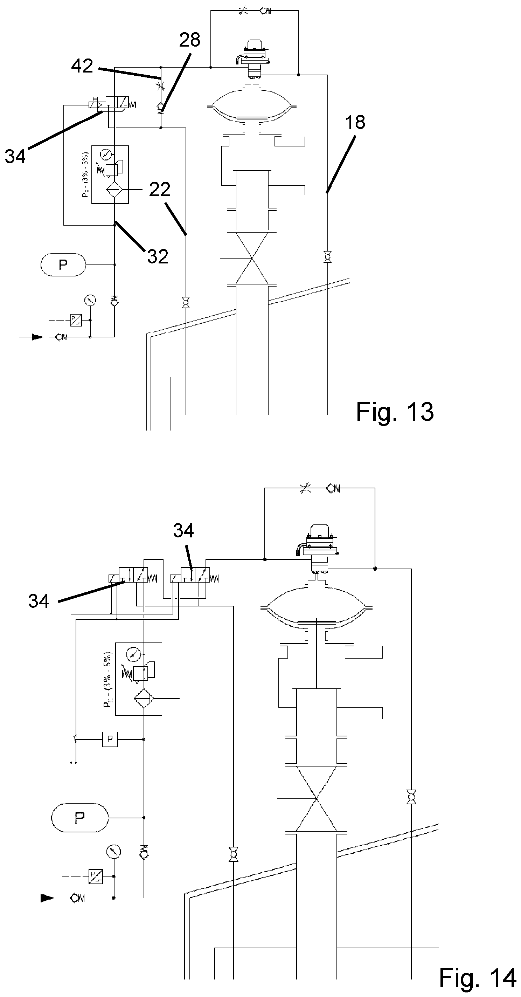

In Figur 13 eine Rückspülleitung 42 dargestellt, in der sich ein weiteres Rückschlagventil 28 befindet. Durch diese Rückspülleitung 42 wird Medium, das durch die Spülleitung 32 und das Ventil 34 in die Füllleitung 22 strömt, auch in den Tank zwei geleitet, sodass auch dieser Teil der Füllleitung 22 gespült werden kann. In Figur 14 sind zwei Ventile 34 in Serie geschaltet, um die Redundanz und damit die Sicherheit der Anlage zu erhöhen.

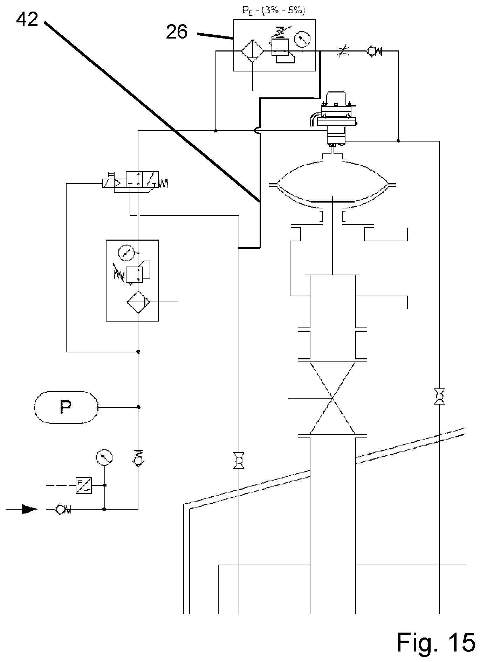

Figur 15 entspricht der Darstellung aus Figur 12, in der zusätzlich die Rückspulleitung 42 vorhanden ist. In dieser herrscht der durch den zweiten Druckminderer 26 erzeugte Spüldruck, der auch in der Steuerleitung herrscht.

### Bezugszeichenliste:

- 2: Tank
- 4: Überdruckventil
- 6: ersten Anteil
- 8: zweiter Anteil
- 10: Hauptventilkammer
- 12: Zulauf
- 14: Ablauf
- 16: Pilot
- 18: Steuerleitung
- 20: Reservoir
- 22: Füllleitung
- 24: Verbindungsleitung
- 26: Druckminderer
- 28: Rückschlagventil
- 30: Behälter
- 32: Spülleitung
- 34: Ventil
- 36: Schaltleitung
- 38: Drucksensor
- 39: Feder
- 40: elektrische Leitung
- 42: Rückspülleitung

## Patentansprüche

1. Tankanlage, die einen Tank (2) und eine Ventilanordnung mit einem pilotgesteuerten Überdruckventil (4) aufweist, wobei das Überdruckventil (4)
- eine Hauptventilkammer (10),
- eine Füllleitung (22),
- einen Piloten (16) und
- eine Steuerleitung (18) aufweist,
wobei die Hauptventilkammer (10) mit der Füllleitung (22) verbunden und über diese mit einem Füllmedium füllbar ist und wobei die Steuerleitung (18) mit dem Tank (2) und dem Piloten (16) derart verbunden ist, dass der Pilot (16) geöffnet wird, wenn ein Druck in der Steuerleitung (18) einen vorbestimmten Ansprechdruck überschreitet, wodurch das Überdruckventil (4) geöffnet wird,
**dadurch gekennzeichnet, dass**
die Ventilanordnung ein mit einem Spülmedium gefülltes Reservoir (20) aufweist, wobei die Ventilanordnung eingerichtet ist, das Spülmedium mit einem Spüldruck in die Steuerleitung (18) und/oder in die Füllleitung (22) zu leiten.

2. Tankanlage nach Anspruch 1, **dadurch gekennzeichnet, dass** der Spüldruck in der Steuerleitung (18) kleiner als der Ansprechdruck ist.

3. Tankanlage nach Anspruch 1 oder 2, **dadurch gekennzeichnet, dass** der Spüldruck wenigstens 90%, bevorzugt wenigstens 93%, besonders bevorzugt wenigstens 96% des Ansprechdruckes beträgt.

4. Tankanlage nach einem der vorstehenden Ansprüche **dadurch gekennzeichnet, dass** der Spüldruck in der Füllleitung (22) größer als der Ansprechdruck ist.

5. Tankanlage nach einem der vorstehenden Ansprüche, **dadurch gekennzeichnet, dass** die Tankanlage eine Steuerung aufweist, die eingerichtet ist, den Spüldruck in der Füllleitung (22) und/oder in der Steuerleitung (18) so zu steuern, dass der Spüldruck um einen vorbestimmten Wert größer als der Druck innerhalb des Tanks (2) ist.

6. Tankanlage nach einem der vorstehenden Ansprüche, **dadurch gekennzeichnet, dass** das Reservoir (20) über eine Spülleitung (32) mit der Füllleitung (22) verbunden ist.

7. Tankanlage nach einem der vorstehenden Ansprüche, **dadurch gekennzeichnet, dass** die Füllleitung (22) über eine Verbindungsleitung (24) mit der Steuerleitung (18) verbunden ist, wobei in der Verbindungsleitung (24) ein Rückschlagventil (28) angeordnet ist, das einen Durchfluss nur von der Füllleitung (22) in die Steuerleitung (18) erlaubt.

8. Tankanlage nach Anspruch 7, **dadurch gekennzeichnet, dass** die Füllleitung (22) ein Ventil (34) aufweist, das in einen ersten Zustand, in dem die Hauptventilkammer (10) mit Spülmedium füllbar ist, und in einen zweiten Zustand bringbar ist, in dem die Hauptventilkammer (10) mit einem Medium füllbar ist, das sich in dem Tank (2) befindet.

9. Tankanlage nach einem der vorstehenden Ansprüche, **dadurch gekennzeichnet, dass** die Ventilanordnung einen Druckminderer (26) aufweist, der den Druck des Spülmedium auf den Spüldruck reduziert.

10. Ventilanordnung für eine Tankanlage nach einem der vorstehenden Ansprüche, die ein pilotgesteuertes Überdruckventil (4) mit einer Hauptventilkammer (10), einer Füllleitung (22), einem Piloten (16) und einer Steuerleitung (18), aufweist und ein mit einem Spülmedium gefülltes Reservoir (20) aufweist und eingerichtet ist, das Spülmedium mit einem Spüldruck in die Steuerleitung (18) zu leiten, wobei der Spüldruck kleiner als der Ansprechdruck ist.
